# DEMANDE DE BREVET EUROPEEN

(11) **EP 2 586 879 A1**
(43) Date de publication de la demande: **01.05.2013**
(21) Numéro de dépôt: 11186833.7
(22) Date de dépôt: 27.10.2011
(51) Int. Cl.: C21D 1/06, C21D 9/00, C21D 9/32, G04B 13/00

(54) **Procédé de traitement thermique de pièces micromécaniques horlogères**

(71) Demandeur: Nivarox-FAR S.A., 2400 Le Locle (CH)
(72) Inventeur: Charbon, Christian, 2054 Chézard-St-Martin (CH); Fussinger, Alexandre, 2075 Wavre (CH)
(74) Mandataire: Giraud, Eric

(57) **Abrégé**

Procédé de traitement thermique d'un composant micromécanique horloger, ce procédé comprenant l'étape qui consiste à chauffer localement une zone du composant micromécanique horloger dont on souhaite modifier les propriétés physiques par modification locale de la phase, le composant étant chauffé durant un laps de temps suffisamment court pour que seule la zone chauffée localement soit affectée par le traitement thermique, la phase du composant restant inchangée dans ses parties non traitées.

## Description

La présente invention concerne un procédé de traitement thermique de pièces micromécaniques horlogères. Plus précisément, l'invention concerne un procédé de traitement thermique ayant pour but de modifier localement certaines propriétés physiques de pièces de micromécanique horlogère telles que des roues dentées.

On cherche parfois, pour répondre à des besoins spécifiques, à modifier localement les propriétés physiques telles que la dureté, le magnétisme ou bien encore la ductilité de pièces micromécaniques horlogères. Ceci est notamment le cas dans le cadre du procédé LIGA qui est un procédé de plus en plus couramment employé dans le domaine de la construction horlogère. Ce procédé permet en effet de fabriquer en série des pièces de micromécanique avec une précision tout à fait remarquable et avec une enveloppe de coût qui reste compatible avec les exigences de la fabrication industrielle. Cependant, comme on le verra en détail ci-après, les pièces de micromécanique horlogère obtenues au moyen du procédé LIGA présentent parfois des problèmes de résistance à l'usure que l'on cherche à corriger.

L'acronyme "LIGA" provient de l'allemand. C'est une abréviation pour "Lithographie, Galvanoformung, Abformung" qui représentent les différentes étapes de ce procédé. Succinctement résumé, le procédé LIGA utilisé dans le domaine horloger consiste à insoler aux UV à travers un masque de photolithographie une résine photosensible déposée sur un substrat conducteur. Après développement de la résine, on procède à une étape de galvanisation par électrodéposition au cours de laquelle du métal est déposé dans les microstructures développées précédemment dans la couche de résine photosensible et dont les contours correspondent aux formes des pièces recherchées. La dernière étape consiste à éliminer la couche de résine photosensible restante et à individualiser les composants ainsi obtenus.

Dans le domaine de l'horlogerie, cela fait maintenant plusieurs années que l'on s'intéresse au procédé LIGA. Cependant, comme on l'aura compris de ce qui précède, l'une des contraintes qui pèse sur le procédé LIGA est que le matériau utilisé doit pouvoir être déposé par électrolyse. Dans le domaine de l'horlogerie, le premier matériau utilisé a été le nickel. Ce matériau présente l'avantage de pouvoir être mis en oeuvre dans le cadre du procédé LIGA. Il présente néanmoins l'inconvénient d'être magnétique à l'état amorphe, ce qui le rend difficilement utilisable pour des applications horlogères.

La demanderesse s'intéresse actuellement à des pièces de micromécanique horlogère obtenues au moyen du procédé LIGA à l'aide d'un alliage de nickel et de phosphore contenant 12% en poids de phosphore et que l'on appellera par la suite alliage NiP12. Cet alliage NiP12 présente le grand intérêt d'être amagnétique à l'état amorphe. Par contre, la dureté des pièces réalisées en alliage NiP12 par le procédé LIGA est moyenne, de l'ordre de 590 Hv. Des problèmes d'usure directement liés à cette dureté relativement faible apparaissent dans certaines conditions sur de telles pièces de micromécanique horlogère.

Face à ce problème d'usure, la demanderesse a cherché à accroître la dureté des dents des engrenages obtenus par le procédé LIGA. Une technique connue dans le domaine de la fabrication de pièces mécaniques massives par exemple pour l'industrie aéronautique ou automobile consiste à chauffer localement les dents des engrenages. On sait néanmoins que si le chauffage localisé, par exemple au moyen d'un faisceau laser, de pièces massives a pour effet d'augmenter la dureté des zones chauffées, cet échauffement s'accompagne d'une fragilisation des zones ainsi traitées. Néanmoins, dans le domaine de la fabrication de pièces mécaniques massives, l'inertie thermique de ces pièces est telle que seules les surfaces directement chauffées subissent une transformation de phase, la phase de la majorité de la pièce conservant ses caractéristiques intrinsèques.

Il n'en va pas du tout de même dans le domaine de la construction horlogère où les pièces présentent couramment des épaisseurs de l'ordre de quelques dizaines à quelques centaines de microns et où les dimensions excèdent rarement le millimètre.

La présente invention a donc pour but de pallier les inconvénients mentionnés ci-dessus en procurant un procédé de traitement thermique de pièces micromécaniques horlogères permettant de modifier localement les propriétés physiques de ces pièces sans pour autant affecter leur phase dans les parties non traitées.

A cet effet, la présente invention concerne un procédé de traitement thermique d'un composant micromécanique horloger, ce procédé comprenant l'étape qui consiste à chauffer localement une zone du composant micromécanique horloger dont on souhaite modifier les propriétés physiques par modification locale de la phase, le composant étant chauffé durant un laps de temps suffisamment court pour que seule la zone chauffée localement soit affectée par le traitement thermique, la phase du composant restant inchangée dans sa partie non traitée.

Grâce à ces caractéristiques, le procédé selon l'invention permet de modifier de manière très localisée certaines des propriétés physiques de composants micromécaniques horlogers telles que la dureté, la ductilité ou le magnétisme par modification locale de la phase de la zone chauffée, sans que cette modification des propriétés physiques n'affecte la phase du composant dans sa partie non traitée.

Selon une caractéristique complémentaire de l'invention, le procédé consiste à chauffer localement la zone du composant micromécanique horloger pour en augmenter la dureté.

L'invention permet ainsi, par exemple, d'augmenter de manière très localisée la dureté d'un composant micromécanique horloger sans pour autant affecter la phase de ce composant dans sa partie non traitée. Ce point est très critique car l'on sait que si un traitement thermique a pour effet de durcir la zone chauffée du composant, le corolaire d'un tel traitement est de rendre la zone chauffée plus fragile. Il est par conséquent essentiel de ne chauffer que la zone du composant dont on souhaite augmenter la dureté afin de ne pas fragiliser le composant dans son ensemble.

S'étant assigné cet objectif, la demanderesse a soumis les dents d'un engrenage réalisé par électrodéposition de NiP12 selon le procédé LIGA à une source de chaleur ponctuelle par exemple du type laser.

A sa grande surprise, la demanderesse a constaté que sous réserve d'échauffer localement les dents de l'engrenage pendant un laps de temps court, il est possible d'accroître sensiblement la dureté de ces dents sans pour autant affecter la phase de l'engrenage dans sa partie non traitée. Ce résultat est d'autant plus remarquable que l'on comprend aisément que l'inertie thermique d'un tel engrenage est faible au regard de ses dimensions et des températures élevées atteintes par le faisceau laser.

Ce résultat est confirmé par une analyse cristallographique d'un engrenage qui permet d'observer la transformation de phase induite par le chauffage. En effet, dans les zones chauffées de l'engrenage qui est initialement à l'état amorphe, les composants nickel et phosphore subissent une séparation de phase et précipitent sous la forme de nickel et de Ni₃P. De même, la dureté des zones chauffées de l'engrenage augmente de l'ordre de 50% par rapport à la dureté intrinsèque de l'alliage NiP12, tandis que la dureté de l'engrenage dans sa partie non traitée ne varie pratiquement pas. Enfin, on observe une légère magnétisation des zones chauffées de l'engrenage, sans que cela soit pour autant préjudiciable au bon fonctionnement du mécanisme horloger dans lequel l'engrenage est intégré.

Selon une caractéristique complémentaire, le procédé selon l'invention s'applique à tout type de pièce micromécanique horlogère issue du procédé LIGA et réalisée en un matériau tel que les nickels et les alliages de nickel et de phosphore, de tungstène ou de fer, ainsi qu'à des pièces micromécaniques horlogères issues de procédés conventionnels et réalisées dans des matériaux pouvant subir un traitement de trempe comme les aciers au carbone ou les alliages à durcissement structural tels que les alliages cuivre/béryllium.

Selon une autre caractéristique de l'invention, on utilise un faisceau laser, un système de chauffage par induction, un micro-chalumeau fonctionnant, par exemple, suivant le principe de l'hydrolyse et de la recombinaison des composants hydrogène et oxygène de l'eau ou tout autre système permettant d'appliquer très localement une haute densité d'énergie pour durcir localement le composant. A titre d'exemple, on peut également envisager de chauffer localement le composant soit par contact d'un petit élément tel qu'une tige préalablement chauffée avec la partie à traiter, soit par rayonnement en amenant un tel élément préalablement chauffé au voisinage de la zone à traiter.

D'autres caractéristiques et avantages de la présente invention ressortiront plus clairement de la description détaillée qui suit d'un mode de mise en oeuvre du procédé selon l'invention, cet exemple étant donné à titre purement illustratif et non limitatif seulement en liaison avec le dessin annexé sur lequel:
- la figure 1 est une vue en perspective d'un composant horloger réalisé par électrodéposition de NiP12 selon le procédé LIGA, et
- la figure 2 est une vue en perspective du composant horloger de la figure 1 monté sur un posage pour la mise en oeuvre du procédé de l'invention.

La présente invention procède de l'idée générale inventive qui consiste à chauffer brièvement et de manière très localisée un composant micromécanique horloger afin de modifier les propriétés physiques telles que la dureté, la ductilité ou le magnétisme de la zone chauffée. Par composant micromécanique horloger, on entend tout type de pièce telle qu'engrenage, roue dentée ou autre utilisée dans un mouvement horloger et obtenue soit par des procédés conventionnels de mise en forme de matériaux pouvant subir un traitement de trempe, soit par le procédé LIGA. On s'est en effet rendu compte, lors de certains tests de vieillissement, que des composants en nickel/phosphore à 12% en poids de phosphore obtenus par le procédé LIGA présentaient une usure anormalement rapide. Pour résoudre ce problème, il a été envisagé de durcir ces composants tels que des engrenages dans les régions où ceux-ci sont en contact avec des composants adjacents. Néanmoins, la seule technique connue pour augmenter la dureté de composants mécaniques consiste à chauffer localement ces composants. Or, le chauffage de tels composants, s'il permet d'augmenter leur dureté, s'accompagne en même temps d'une fragilisation des zones chauffées. Cette technique est utilisée avec succès pour des pièces massives destinées par exemple à l'aéronautique ou à l'automobile. En effet, étant donné leurs dimensions, de telles pièces massives présentent une inertie thermique suffisamment élevée pour que seules les zones chauffées soient affectées par le traitement thermique, la phase de la pièce dans sa partie non traitée restant inchangée. Il n'en va par contre pas de même dans le domaine de l'horlogerie où les composants sont de très petites dimensions et présentent une inertie thermique très faible. Malgré tout, la demanderesse, allant à l'encontre de ces préjugés, s'est rendu compte qu'en chauffant de manière très localisée et pendant un laps de temps très court des composants micromécaniques horlogers, il était possible d'augmenter la dureté des zones chauffées sans affecter la phase des composants horlogers dans leur partie no ntraitée et donc leur tenue mécanique. Dans le cas particulier d'une roue dentée réalisée en un alliage de nickel et de phosphore à 12% en poids de phosphore, la demanderesse s'est aperçue qu'un chauffage localisé en bout des dents de l'engrenage s'accompagnait d'une transformation de phases. En effet, l'alliage qui est initialement à l'état amorphe, subit une séparation de phase avec précipitation des composants nickel et phosphore sous la forme de nickel et de Ni₃P. Parallèlement, cette transformation de phases s'accompagne d'une augmentation de la dureté des zones chauffées d'un facteur 2 environ. Cette dernière indication permet également de comprendre qu'il n'est pas envisageable que la dureté de l'engrenage augmente dans de telles proportions dans tout le volume de la pièce, faute de quoi de telles pièces ne pourraient plus être montées selon les techniques traditionnelles de chassage par risque de les casser. Enfin, on observe une légère magnétisation des zones fonctionnelles localement chauffées des composants, sans que cela atteigne pour autant des valeurs préjudiciables.

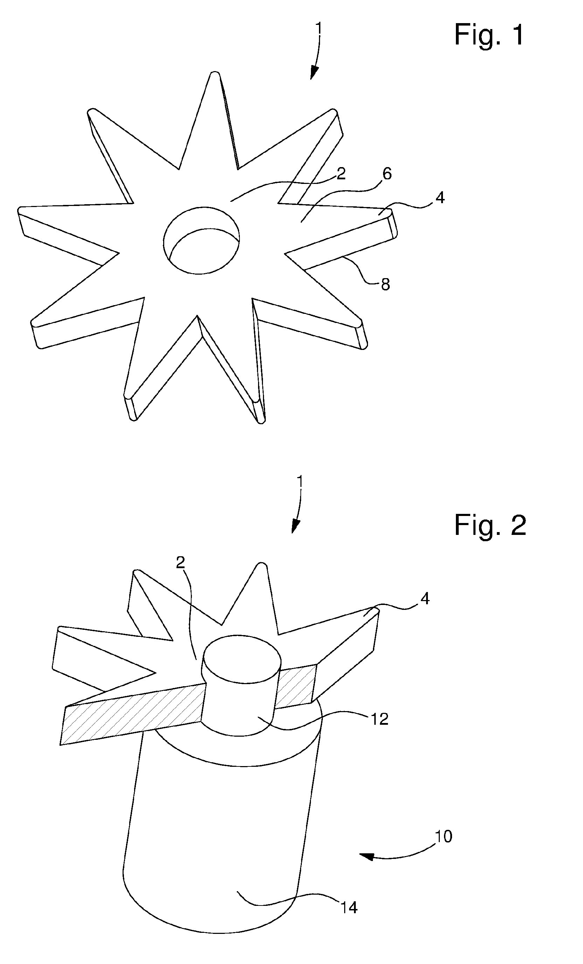

La figure 1 est une vue de dessus d'un composant horloger réalisé par électrodéposition de NiP12 selon le procédé LIGA. Dans l'exemple illustré, le composant horloger est une roue. Désignée dans son ensemble par la référence numérique générale 1, cette roue comprend un moyeu 2 à partir duquel s'étend radialement une pluralité de dents 4 régulièrement espacées. Cette roue 1 comprend une face supérieure 6 et une face inférieure 8.

Le tableau ci-dessous résume les mesures de dureté Vickers effectuées en différents points de la roue 1 illustrée à la figure 1. Ces mesures de dureté ont été effectuées sur les faces supérieure 6 et inférieure 8 de deux pièces différentes mais de géométries identiques obtenues par électrodéposition de NiP12 selon le même procédé LIGA.

| | Pièce 1 | | Pièce 2 | |
|---|---|---|---|---|
| Point de mesure | Dessus | Dessous | Dessus | Dessous |
| Dent 4 | 1020 | 998 | 996 | 1010 |
| Moyeu 2 | 613 | 607 | 605 | 607 |

La dureté du NiP12 amorphe après procédé LIGA mais avant traitement thermique est de 590 Hv +/- 30 Hv. On constate que la dureté du moyeu 2 de la roue 1 après traitement thermique selon l'invention est comprise entre 605 et 613 Hv selon la pièce considérée et selon que la mesure ait été effectuée sur la face supérieure ou sur la face inférieure de la pièce. On comprend donc, au vu des résultats qui précèdent, que la dureté du moyeu 2 de la roue 1 n'est nullement affectée par le traitement thermique auquel sont soumises les dents 4 de la roue 1. Par contre, la dureté d'une dent 4 après que son extrémité ait été traitée thermiquement au moyen d'un faisceau laser est comprise, selon la pièce considérée et selon que la mesure ait été effectuée sur la face supérieure ou la face inférieure de la dent 4, entre 996 et 1020 Hv, ce qui représente une augmentation de la dureté de l'extrémité de la dent de l'ordre de 50% par rapport à la dureté du matériau amorphe directement issu du procédé LIGA et non traité thermiquement.

On constate donc, au vu de ce qui précède, que la dureté des zones traitées thermiquement augmente dans un rapport compris de l'ordre de 50% par rapport au matériau NiP12 en phase amorphe obtenu directement par le procédé LIGA. On notera que le changement de structure du matériau NiP12 d'un état amorphe après électrodéposition à un état dans lequel il subit une séparation de phase avec précipitation des composants nickel et phosphore sous la forme de nickel et de Ni₃P est observé dès 200 °C.

Il va de soi que la présente invention n'est pas limitée au mode de mise en oeuvre qui vient d'être décrit et que diverses modifications et variantes simples peuvent être envisagées par l'homme du métier sans sortir du cadre des revendications annexées à la présente demande de brevet. En particulier, on peut imaginer de chauffer les composants tels que des roues par induction. Dans ce cas, on utilise un anneau posé sur la roue et dont le diamètre correspond au diamètre extérieur de la roue, puis on fait circuler un courant alternatif dans l'anneau.

Le mérite inventif de la demanderesse est d'avoir été capable d'aller à l'encontre des préjugés de l'état de la technique. En effet, il est connu que pour accroître la dureté des zones fonctionnelles de pièces massives, on peut chauffer ces zones. Néanmoins, le chauffage s'accompagne d'une fragilisation et d'une magnétisation des zones chauffées. Dans le cas de pièces massives, cela n'est toutefois pas problématique car la pièce dans son volume n'est pas affectée. Il en va tout autrement avec des composants micromécaniques horlogers dont les dimensions et la masse sont faibles et dont on pouvait donc penser qu'ils seraient affectés par le traitement thermique même dans leurs parties non traitées. Bien au contraire, la demanderesse a réussi à démontrer que non seulement un chauffage localisé des zones fonctionnelles d'un composant horloger tel qu'une roue était possible, mais encore qu'un tel chauffage s'accompagnait uniquement d'un durcissement des zones chauffées, tandis que le composant conservait sa phase primitive dans ses zones non traitées. Le résultat de l'invention est un composant horloger dont les zones fonctionnelles sont durcies et donc plus résistantes avec un moyeu qui reste ductile et qui peut donc être assemblé par chassage selon les techniques traditionnelles.

Bien évidemment, on comprendra qu'en fonction des besoins spécifiques, on peut chercher à modifier d'autres propriétés physiques des composants horlogers. C'est ainsi que l'on peut, par exemple, vouloir rendre un composant localement magnétique, ou bien modifier la ductilité d'un tel composant, soit dans le sens d'un accroissement, soit dans le sens d'une diminution. Il faut en effet bien comprendre que l'apport inventif de l'invention ne se résume pas simplement à une augmentation localisée de la dureté de composants micromécaniques horlogers, mais que cet apport concerne très généralement la modification localisée et contrôlée par traitement thermique des propriétés physiques de tels composants.

Pour la mise en oeuvre du procédé selon l'invention, on peut avantageusement utiliser un posage 10 tel qu'illustré à la figure 2. Ce posage 10 se présente sous la forme d'un cylindre étagé avec une première portion 12 dont le diamètre extérieur correspond sensiblement au diamètre intérieur du moyeu 2 de la roue 1, et avec une seconde portion 14 dont le diamètre extérieur est supérieur à celui de la première portion 12 de façon que la roue 1 puisse prendre appui. De l'avis de la demanderesse, un tel posage 10 joue un rôle dans la réussite de la mise en oeuvre du procédé selon l'invention. En effet, dans le cas de la roue dentée 1 illustrée à la figure 2, les dimensions des dents 4 sont faibles par rapport à celles du moyeu 2 de la roue 1, de sorte que le moyeu 2 de la roue 1 joue le rôle de puits de chaleur et que cette chaleur diffuse dans le posage 10. Ainsi, la température du moyeu 2 de la roue 1 n'atteint jamais des valeurs qui provoqueraient une transformation de phase et une augmentation concomitante de sa dureté.

## Revendications

1. Procédé de traitement thermique d'un composant micromécanique horloger, ce procédé comprenant l'étape qui consiste à chauffer localement une zone du composant micromécanique horloger dont on souhaite modifier les propriétés physiques par modification locale de la phase, le composant étant chauffé durant un laps de temps suffisamment court pour que seule la zone chauffée localement soit affectée par le traitement thermique, la phase du composant restant inchangée dans ses parties non traitées.

2. Procédé selon la revendication 1, **caractérisé en ce que** l'on chauffe localement la zone du composant micromécanique horloger pour en augmenter la dureté.

3. Procédé selon l'une quelconque des revendications 1 ou 2, **caractérisé en ce que**, pour durcir localement le composant, on utilise un faisceau laser, un système de chauffage par induction, un micro-chalumeau ou bien un élément préalablement chauffé qui chauffe localement le composant soit par contact direct, soit par rayonnement.

4. Procédé selon l'une quelconque des revendications 1 à 3, **caractérisé en ce que** le procédé s'applique à tout type de pièce micromécanique horlogère issue du procédé LIGA et réalisée en un matériau tel que les nickels et les alliages de nickel et de phosphore, de tungstène ou de fer, ainsi qu'à des pièces micromécaniques horlogères issues de procédés conventionnels et réalisées dans des matériaux pouvant subir un traitement de trempe comme les aciers au carbone ou les alliages à durcissement structural tels que les alliages cuivre/béryllium.

5. Procédé selon l'une quelconque des revendications 1 à 4, **caractérisé en ce que** la zone du composant qui doit être chauffée localement est portée à une température d'au moins 200°C.

6. Procédé selon l'une quelconque des revendications 1 à 5, **caractérisé en ce que**, pour la mise en oeuvre du procédé, le composant micromécanique horloger est posé sur un posage (10) dans lequel la chaleur induite par le chauffage diffuse.
